# EUROPÄISCHE PATENTSCHRIFT

(11) **EP 2 656 325 B1**
(45) Veröffentlichungstag und Bekanntmachung des Hinweises auf die Patenterteilung: **03.10.2018**
(21) Anmeldenummer: 11788019.5
(22) Anmeldetag: 22.11.2011
(51) Int. Cl.: G07D 7/12

(54) **VERFAHREN UND VORRICHTUNG ZUR AUTHENTIZIERUNG VON MIT FOTOCHROMEN SYSTEMEN MARKIERTEN DOKUMENTEN**
METHOD AND DEVICE FOR AUTHENTICATING DOCUMENTS MARKED WITH PHOTOCHROMIC SYSTEMS
PROCÉDÉ ET DISPOSITIF D'AUTHENTIFICATION DE DOCUMENTS MARQUÉS PAR DES SYSTÈMES PHOTOCHROMES

(30) Priorität: 22.12.2010 CH 21532010
(43) Veröffentlichungstag der Anmeldung: 30.10.2013
(73) Patentinhaber: U-NICA Technology AG, 7208 Malans (CH)
(72) Erfinder: RUTZ, Alfred, CH-7014 Trin (CH); RÜEGG, Alexander, CH-5405 Baden (CH)
(74) Vertreter: Detken, Andreas
(86) Internationale Anmeldenummer: PCT/CH2011/000276
(87) Internationale Veröffentlichungsnummer: WO 2012/083469

(56) Entgegenhaltungen:
- EP-A1- 1 158 459
- EP-A1- 1 986 162
- US-A1- 2005 078 851
- US-A1- 2010 200 649
- HAMPP M ET AL: "Multifunctional Optical Security Features based on Bacteriorhodopsin", PROCEEDINGS OF SPIE, SPIE, USA, Bd. 5310, 1. Januar 2004 (2004-01-01), Seiten 117-124, XP002584224, ISSN: 0277-786X, DOI: DOI:10.1117/12.522279

## Beschreibung

### TECHNISCHES GEBIET

Die vorliegende Erfindung betrifft Verfahren und Vorrichtungen zur Authentizierung von fälschungssicheren Dokumenten mit fotochromen Sicherheitsmerkmalen aus der Klasse der Retinalproteine sowie zur Verwendung in derartigen Verfahren geeignete Produkte wie insbesondere gesicherte Dokumente wie beispielsweise Reisepässe, Banknoten, Zertifikate und Identitätskarten.

### STAND DER TECHNIK

Hochgesicherte Dokumente in Form von Papierdokumenten wie Reisepässe, Banknoten und solche mit einem kartenförmigen Aufbau, aber auch Dokumente zum Schutz der Originalität eines Produktes wie Garantiezertifikate, Übereinstimmungserklärungen und Originalverpackungen bedürfen zunehmend einer vernetzten Sicherheit in Gestalt von Sicherheitsmerkmalen auf dem Dokument wie auch beispielsweise der Hinterlegung dieser Sicherheitsmerkmale in einer zentralen Datenbank.

Idealerweise wird eine einzelne Authentifizierung mit einem mobilen Gerät ausgeführt, das drahtlos an eine Server-gestützte zentrale Datenbank angebunden ist. Ein solches Gerät ist z.B. ein mobiles Telefon, dessen Software eine zumindest zeitweise Verbindung zu einem Server herstellen kann, um zum Beispiel eine Datensynchronisation o.ä. durchzuführen. Die Vernetzung dieser Daten läuft auf einen höheren Grad der Fälschungssicherheit hinaus.

Dies wurde zum Beispiel in der US2009/0187435 bereits beschrieben.

Gleichzeitig kann die Vernetzung der Sicherheitsmerkmale neben der erhöhten Sicherheit auch eine statistische Auswertung der zentralen Datenbank erlauben, die in vielfältiger Weise Nutzen bringt. Dies kann die regionale Nutzung oder auch die Anzahl der Verifikationen pro Dokument beinhalten, besonders erwähnenswert ist die kommerzielle Nutzung der Authentifizierung mit Hilfe eines "one-Click"-Verfahrens wie es bei On-line-Handelsplattformen nicht unüblich ist und zum Beispiel in der US 5,960,411 beschrieben wurde.

Einen besonderen Vorzug in einer solchen Anwendung gemessen Sicherheitsmerkmale, die sowohl visuell mit dem unbewaffneten Auge als auch quasi als Bestätigung der mit dem Auge vorgenommenen ersten Prüfung mit einem mobilen Gerät als zweite Prüfung erkannt werden können, sofern diese über ein optisches Aufnahmesystem wie ein Handscanner oder ein Mobiltelefon mit Kamera verfügen. Ein besonderer Nutzen für den Prüfer des Dokumentes entsteht dann, wenn das mobile Gerät weitere (insbesondere für das unbewaffnete Auge versteckte) Eigenschaften des Sicherheitsmerkmals erkennen kann und damit Zweifel an einer fehlgeschlagenen Authentifizierung beseitigt. Unter einer fehlgeschlagenen Authentifizierung ist auch eine falsch-positive Verifizierung mit dem blossen Auge zu verstehen.

Die Anbindung an einen zentralen Server kann in weiterer Folge aus dem Sicherheitsmerkmal ein umfassendes bevorzugt weltweit vernetztes Sicherheitssystem machen.

In Zusammenhang mit der Barcode-Technologie werden Mobiltelephone reichlich genutzt (vgl. z.B. WO2009/141614), jedoch leiden diese unter der leichten Fälschbarkeit eines Barcodes und seiner geringen bzw. fehlenden Redundanz, die für einen effektiven Fälschungsschutz hochsensibler Dokumente erforderlich ist, wenn er nicht mit weiteren Sicherheitsmerkmalen bzw. Eigenschaften verknüpft ist.

Hampp M. et al., "Multifunctional Optical Security Features based on Bacteriohodopsin", Proceedings of SPIE, SPIE, USA, Bd. 5310, S. 117-124 offenbart ein Verfahren gemäss dem Oberbegriff von Anspruch 1.

### DARSTELLUNG DER ERFINDUNG

Es ist entsprechend eine der Aufgaben der vorliegenden Erfindung, ein Verfahren zur Verifikation von Sicherheitsmerkmalen zur Verfügung zu stellen. Insbesondere geht es dabei darum, ein Verfahren zur Verifikation von Sicherheitsmerkmalen mit üblichen mobilen Telefongeräten und/oder Smartphones zu ermöglichen.

In Folge der Tatsache, dass heute derartige Mobiltelefone so gut wie standardmäßig auch mit einer Kamera und mit einer Blitzfunktion ausgestattet sind, erweisen sie sich überraschenderweise ohne besondere zusätzliche hardwaremäßige Maßnahmen geeignet als hochempfindliches und in eine zentrale Datenverwaltung einbindbares Verifikationsgerät für eine ganz bestimmte Klasse von Sicherheitsmerkmalen, namentlich von fotochromen Sicherheitsmerkmalen. Es zeigt sich nämlich, dass diese Geräte, insbesondere wenn mit einem spezifischen Datenverarbeitungsprogramm zur Durchführung ausgestattet, gerade die charakteristischen Eigenschaften von derartigen Sicherheitsmerkmalen ausgezeichnet zu ermitteln in der Lage sind, und gegebenenfalls gleichzeitig auch die entsprechenden Informationen an eine zentrale Datenbank, entweder zur Verifikation auf dieser zentralen Datenbank oder zur Buchhaltung auf dieser zentralen Datenbank, zu übermitteln.

Eine besondere Eignung für mehrdimensionale Sicherheitsmerkmale, die in der ersten Stufe auch mit dem blossen Auge visuell verifiziert werden können, haben nämlich die fotochromen Sicherheitsmerkmale, insbesondere jene basierend auf Retinalproteinen, die neben ihrer visuellen Auffälligkeit durch ihr Farbwechselverhalten auch weitere Eigenschaften haben, deren Ursache in den komplexen elektronischen Zustandsänderungen der Moleküle liegt. So ist neben dem Farbwechsel, der einfach durch Bestrahlen mit zum Beispiel Sonnenlicht induziert werden und im Dunkeln wieder umgekehrt ablaufen kann, auch ihre optische Aktivität durch Bestrahlung mit polarisiertem Licht und ihr Nutzen als optisches Datenspeichermaterial zu nennen.

Als kommerziell herstellbarer Vertreter dieser Stoffklasse ist insbesondere Bacteriorhodopsin zu nennen. Bacteriorhodopsin und insbesondere Bacteriorhodopsin in seiner üblicherweise vorliegenden Form als zweidimensionale kristalline Patches bestehend aus Komplexverbindungen mit der Purpurmembran, ist ein intensiv untersuchtes System. Das System ist insbesondere deshalb von großem Interesse, weil es als äußerst widerstandsfähiges optisches System in der Lage ist, die oben erwähnten unterschiedlichen optischen Zustände einzunehmen und nahezu beliebig oft zwischen beiden Zuständen hin-und herzuschalten. Bevorzugt sind solche Varianten des Bacteriorhodopsin-Purpurmembran-Komplexes, die zwischen diesen optischen Zuständen lange Schaltzeiten im Bereich von mehreren Sekunden aufweisen, um so eine bessere Erkennung der Zustandsänderung zu ermöglichen. So gibt es beispielsweise beim Mutanten D96N einen Übergang vom helladaptierten (senfgelben) Zustand in den Dunkelzustand (Violett) mit einer Halbwertszeit von circa 20s. Der Retinalprotein-Komplex vom Bacteriorhodopsin-Typ mit geeigneten Fotozyklen wurde eingehend beschrieben (vgl. z.B. EP-A-1 171 309). Grundsätzlich können Bacteriorhodopsin-Purpurmembran-Komplexe mit geeigneten Eigenschaften als Vorstufe für eine weitere Verarbeitung, zum Beispiel für die Herstellung von Druckfarben in einer für eine industrielle Verwertung tauglichen, d. h. stabilen, Form zur Verfügung gestellt werden (vgl. z.B. WO2010/124908). Die Verwendung des Wildtyps mit deutlich kürzeren Schaltzeiten ist für eine rein instrumentelle Kontrolle der fotochromen Reaktion auch ausreichend, aber nicht immer bevorzugt.

Die Verwendung des Bacteriorhodopsin-Purpurmembran-Komplexes als fotochrome Markierung als Merkmal für gesicherte Dokumente ist mit der DE-A-19914702 bzw. US 6,616,964 belegt und der Schutz von hochgesicherten Dokumenten wie Banknoten im Allgemeinen ist in der EP-A-1 404 526 beschrieben. Die Eigenschaft dieser Stoffklasse als optisches Medium zur Datenspeicherung oder für andere technische Anwendungen ist ebenfalls belegt (Oesterhelt et al., A Biological Material for Information Processing, Quarterly Reviews of Biophysics 24 (1991) 425-478). Es handelt sich bei dieser Klasse von Retinalproteinen also um kommerziell hochinteressante Systeme für verschiedene Anwendungen, wobei für diese Erfindung ihre Eigenschaft der lichtinduzierten Farbänderung wesentlich ist.

Für den Farbwechsel von fotochromen Sicherheitsmerkmalen, insbesondere, aber nicht ausschließlich von solchen basierend auf Bacteriorhodopsin-Purpurmembran-Komplex, deren Übergang ausgesprochen charakteristisch und damit zur Authentizierung eines Dokumentes sehr geeignet ist, wird mit anderen Worten ein leicht verfügbares Hilfsmittel vorgeschlagen, bevorzugt ein Mobiltelefon mit integriertem Blitz, das den Farbwechsel durch Belichtung herbeiführen kann, den Farbwechsel erkennen kann, den Farbwechsel zur Verifikation nutzen und gegebenenfalls das Ergebnis dieser Verifikation über eine Mobilfunkverbindung in einer Datenbank ablegen kann, wo es zum Beispiel statistisch ausgewertet werden und insbesondere als Basis für eine Verrechnung des Verifikationsvorgangs dienen kann (pay-per-authentification), wo es aber auch grundsätzlich verifiziert werden kann (die Verifikation kann, muss aber nicht auf dem Mobiltelefon erfolgen). Der Stand der Technik erlaubt es bislang nicht, all diese Funktionen in einem Handgerät zur Verfügung zu stellen und konnte ausserdem bisher keine Lösung für die Dokumentation und kommerzielle Vergütung einer einzelnen Verifikation bieten. Überraschend ist wie bereits eingangs erläutert die Erkenntnis, dass ein heute quasi bei Jedermann vorzufindendes Mobiltelefon, das auf einfachste Weise mit geeigneten Zusatzprogrammen ausgestattet werden kann, also zum Beispiel ein so genanntes Smartphone mit dedizierten Applets, diese Aufgabe erfüllen kann, sofern es eine zusätzliche Beleuchtungs- bzw. Blitzvorrichtung, bevorzugt einen integrierten Blitz enthält, wie es zum Beispiel bei den im Moment verfügbaren Modellen Apple iPhone 4 oder HTC Desire, aber auch bei vielen anderen, der Fall ist.

Konkret betrifft die vorliegende Erfindung ein Verfahren zur Überprüfung der Echtheit eines Sicherheitsmerkmals, gemäß Anspruch 1.

Optional ist das Verfahren ausserdem durch den folgenden Schritt ausgezeichnet: III. Aufbau einer kabellosen, typischerweise gesicherten Verbindung über die Telefonfunktion oder eine Internetfunktion des Mobiltelefons und Übermittlung wenigstens eines oder beider der Bilder oder einer aus der Differenz der beiden Bilder abgeleiteten Authentifikationsfunktion an einen Empfänger mit einer Datenbank, Auswertung der Authentifikation und/oder Buchung der Authentifikation beim Empfänger. Bevorzugt führt das Mobiltelefon mit der on-board-Software die Authentifizierung durch und im Zuge einer späteren Synchronisation mit dem Server werden die gesammelten Ergebnisse übermittelt. Vor allem bevorzugt ist also die Durchführung der Verifikation mit der dedizierten on-board-software und die Übermittlung der Ergebnisse paketweise an den Server bei der nächsten aufgebauten Verbindung. Im Zuge einer solchen Synchronisation kann auch die Anwendungssoftware bzw. ein Update auf das Telefon heruntergeladen werden.

Gemäß einer anderen Ausführungsform des Verfahrens kann aber nach Schritt III. der Empfänger das Resultat der Authentifikation auch an das Mobiltelefon übermitteln und dieses Resultat wird auf dem Mobiltelefon auf einem Display oder über eine akustische Schnittstelle ausgegeben.

Nach Schritt III. kann, entweder sofort oder gegebenenfalls auch erst nach Akkumulation von genügenden Authentifikationvorgängen, vom Empfänger direkt oder indirekt ein Bericht an das Mobiltelefon und/oder über einen anderen Kommunikationsweg mit einer statistischen Auswertung und/oder Fakturierung ausgegeben werden.

Wie bereits eingangs erwähnt handelt sich bevorzugtermassen beim Sicherheitsmerkmal um ein fotochromes Sicherheitsmerkmal, welches dabei unter Einwirkung des Blitzes eine Farbänderung und/oder Formänderung zeigt. Unter einer Formänderung ist dabei beispielsweise die durch die Lichteinwirkung geänderte Außenlinie eines Zeichens oder ähnliches zu verstehen

Es kann sich, wie bereits weiter oben im Detail erläutert, bevorzugtermassen beim Sicherheitsmerkmal um ein Sicherheitsmerkmal auf Basis eines Retinalproteins, insbesondere auf Basis von Bacteriorhodopsin, bevorzugtermassen in seiner in der Purpurmembran eingebauten Form, handeln, wobei das Bacteriorhodopsin bevorzugt aus dem Wildtyp des Halobakteriums stammt und insbesondere bevorzugt ein Mutant des Typs D96N ist.

Im Schritt I. wird dann der dunkeladaptierte Zustand des Bacteriorhodopsins über das erste Bild ausgemessen und im Schritt II. der helladaptierte Zustand des Bacteriorhodopsins, wobei bevorzugtermassen der helladaptierte Zustand bei mehr als einem Zeitpunkt nach der Anregung ausgemessen wird.

Die Bilder können auch in Form eines Filmes aufgenommen und ausgewertet werden oder in Form von wenigstens einem Bild im Rahmen des Schrittes I., und wenigstens zwei, bevorzugt wenigstens drei, zeitlich verzögert aufgenommenen Bildern im Rahmen des Schrittes II.

Nach Schritt II. wird im Mobiltelefon aus den wenigstens zwei Bildern unter Zuhilfenahme eines geeigneten Datenverarbeitungsprogramms auf dem Mobiltelefon (4) eine Authentifikationsprüfung durchgeführt und das Resultat dieser Prüfung wird über ein Display oder eine akustische Schnittstelle auf dem Mobiltelefon ausgegeben und kann im Schritt III. an den Empfänger übergeben werden.

Das Sicherheitsmerkmal kann gemäß einer bevorzugten Ausführungsform auf einem Sicherheitsdokument angeordnet sein, wobei es sich beim Sicherheitsdokument um ein Ausweisdokument, ein Reisedokument, eine Banknote, ein Zertifikat einen Scheck, eine Verpackung, eine Garantieurkunde, ein Aktienzertifikat handeln kann.

Vorgängig zum Schritt I. kann das Sicherheitsmerkmal, um einen definierten Zustand für die Aufnahme ohne spezifische Lichteinwirkung sicherzustellen, vor der Einwirkung von Licht geschützt werden, und im wesentlichen unmittelbar anschließend der Schritt I. durchgeführt werden. Der Schutz vor Licht kann beispielsweise durch ein bedecken mit einem Licht und durchlässigen Gegenstand erfolgen, kann beispielsweise direkt das Mobiltelefon aufgelegt werden auf das Sicherheitsmerkmal und dieses dann für die Aufnahme kurzfristig vom Sicherheitsdokument genügend weit entfernt werden. Die entsprechenden Anweisungen, wie dieses Verfahren durchgeführt werden kann, können dabei vorteilhafter Weise auf dem Display des Mobiltelefons angezeigt werden. Bevorzugtermassen gibt es also auf dem Mobiltelefon ein Datenverarbeitungsprogramm, welches dem Benutzer auf der der Kamera respektive deren Linse abgewandten Seite über das Display die genauen Anweisungen für die Durchführung des Verfahrens in ihrer zeitlichen Abfolge gibt. So beispielsweise nach Aktivieren des Datenverarbeitungsprogramms im Sinne von: 1. Bitte legen Sie das Mobiltelefon auf das Sicherheitsmerkmal so dass es vor Lichteinfluss geschützt ist; 2. Anschließend wird automatisch während eines definierten Zeitraums von beispielsweise 20 s auf dem Display angezeigt, dass die Position unverändert beibehalten werden muss; 3. Anschließend wird ausgegeben: Bitte entfernen Sie das Mobiltelefon zügig senkrecht vom Sicherheitsdokument bis auf eine Distanz von 15 cm und drücken Sie unverzüglich auf den Auslöser; 4. Anschließend wird, nachdem das Datenverarbeitungsprogramm automatisch die Blitzfunktion aktiviert hat, ausgegeben: Bitte drücken Sie erneut auf den Auslöser; 5. Anschließend wird, sofern nicht sofort eine Verifikationsresultat ausgegeben werden kann, darauf hingewiesen, dass gewartet werden soll; 6. Ausgabe des Verifikationsresultats (ja/nein respektive echt/nicht echt oder ähnliches) auf dem Display gegebenenfalls kombiniert mit einer Wahrscheinlichkeitsangabe der Richtigkeit der Aussage.

Alternativ ist es übrigens auch möglich, dass die ganze Verifikation über die Aufnahme eines Filmes erfolgt, dann muss eigentlich nur einmal die Filmfunktion ausgelöst werden, dies kann entweder über den Auslöser oder automatisch über das Datenverarbeitungsprogramm erfolgen, und anschließend führt das Datenverarbeitungsprogramm über das Display den Benutzer automatisch, indem es ihn anweist, wie das Mobiltelefon relativ zum Sicherheitsmerkmal zu bewegen ist und die rechtlichen Schritte automatisch ausführt, beispielsweise das auslösen eines Blitzes zum richtigen Zeitpunkt wenn das Mobiltelefon in der richtigen Position ist.

Es kann sich dabei sich bei der Blitzfunktion generell um eine LED-Blitzfunktion handeln. Beim Mobiltelefon kann es sich um ein Smartphone mit einem berührungsempfindlichen Display handeln, über welches ein entsprechendes den Authentifikationprozess steuerndes Datenverarbeitungsprogramm ausgelöst werden kann, wobei vorzugsweise dieses Datenverarbeitungsprogramm über eine Bilderkennungsfunktion verfügt, welche sowohl farbliche Veränderungen als auch formbezogene Veränderungen des Sicherheitsmerkmals ermitteln und relative Unterschiede zwischen dem ersten und dem zweiten Bild, gegebenenfalls unter Zuhilfenahme einer lokalen, auf dem Mobiltelefon angeordneten Datenbank und/oder unter Zuhilfenahme der Datenbank des Empfängers auswerten kann.

Das das Verfahren steuernde und auf dem Mobiltelefon laufende Datenverarbeitungsprogramm kann entweder einfach gewissermassen die Rohdaten übermitteln (aufgenommene Bilder oder Film) oder auch aus den wenigstens zwei Bildern eine Authentifikationsfunktion berechnen (bevorzugte, aber nicht ausschliessliche Form) und diese dann an den Empfänger übermitteln.

Im Rahmen solcher Übermittlungsvorgänge können auch zusätzlich noch Übertragungen von Software oder Software-Updates automatisiert von einer zentralen Datenbank oder einem Provider auf das Mobiltelefon durchgeführt werden. Die Erfindung betrifft also auch ein Datenverarbeitungsprogramm, das von einem Server auf das Mobiltelefon heruntergeladen werden kann.

Die kabellose Verbindung im Rahmen des Schrittes III. ist bevorzugtermassen eine gesicherte Internetverbindung.

Es wird eine Verwendung eines Mobiltelefons in einem Verfahren offenbart, wie es oben erläutert wurde, wobei das Mobiltelefon über Mittel zur Erstellung einer Mobiltelefonverbindung und/oder über Mittel zur Erstellung einer Internetverbindung verfügt, sowie über eine Kamera und über eine Blitzfunktion. Mit anderen Worten ist der Begriff eines Mobiltelefons breit zu verstehen und darunter fallen auch Vorrichtungen, welche nur über Mittel zur Erstellung einer Internetverbindung verfügen sowie über eine Kamera und über eine Blitzfunktion.

Die vorliegende Erfindung betrifft zudem, gemäß Anspruch 13, ein auf einem Mobiltelefon lauffähiges und auf diesen speicherbares oder gespeichertes Datenverarbeitungsprogramm zur Durchführung eines Verfahrens, wie es oben erläutert wurde, d.h. auf ein Computerprogramm, welches Code enthält, der bei seiner Ausführung auf einem Prozessor des Mobiltelefons das Mobiltelefon veranlasst, ein solches Verfahren auszuführen. Das Computerprogramm kann insbesondere als ein Computerprogrammprodukt auf einem geeigneten Datenträger vorliegen, z.B. auf einer CD-ROM, auf einem Flashspeicher usw., oder über ein Netzwerk zum Download bereitgestellt werden. Es kann in beliebiger Form vorliegen, z.B. als Source Code, Object Code oder Maschinencode. Die Erfindung bezieht sich schliesslich auch auf ein Mobiltelefon, gemäß Anspruch 14, auf dem ein solches Programm gespeichert und aufrufbar ist.

Das Dokument kann aus einem Polymer bestehen und vorzugsweise eine Folie sein oder einen mehrschichtigen Folienaufbau haben.

Das Sicherheitsdokument kann beispielsweise auch ein Laminat aus mindestens einer ersten Papierschicht und einer mindestens zweiten Polymerschicht sein und es kann sich beispielsweise um eine Ausweiskarte handeln.

Bei der eigentlichen Messung handelt es sich dabei typischerweise um eine Differenzmessung der Helligkeit oder Farbe der farbgebenden Komponente auf der Basis von BR um ein Ergebnis des Verifizierungszustandes zu erzeugen. Da dabei in Folge der Tatsache, dass händig zwei verschiedene Aufnahmen gemacht werden müssen, nicht in jedem Fall sichergestellt sein kann, dass eine einfache Überlagerung der Bilder für die Differenzmessung genügend ist, kann es von Vorteil sein, im Rahmen der Auswertung eine automatisierte relative Positionierung und/oder Skalierung der beiden Aufnahmen vorzunehmen vor der Ermittlung der Differenz. Zu diesem Zweck können Elemente zur Patternrecognition im Datenverarbeitungsprogramm respektive Steuerungsprogramm vorgesehen sein. Alternativ oder zusätzlich ist es möglich, dass nach Aufnahme des ersten Bildes über das Display der Benutzer angewiesen wird, dass als Hintergrund dargestellte erste Bild in Überlappung mit dem Display zu bringen und erst dann auf den Auslöser zu drücken, wenn diese Überlappung gewährleistet ist.

Die Anwendungssoftware kann dabei typischerweise mit Hilfe mindestens eines 1. Symbols (Icon oder App) auf dem Display der Vorrichtung gestartet werden.

Die Daten in der Datenbank können insbesondere für ein Bezahlsystem für Leistungen genutzt werden, die die Authentizierung des Dokumentes beinhalten.

Bevorzugte Ausführungsformen können eines oder mehrere der folgenden Elemente aufweisen:
1. Ein mindestens erstes Sicherheitselement mit einem fotochromen Merkmal, bevorzugt auf der Basis eines Retinalproteins, insbesondere bevorzugt auf der Basis eines Bacteriorhodopsin-Purpurmembran-Komplexes.
2. Dokument, das mit diesem Sicherheitselement geschützt ist, wobei das Dokument ein Reisepass, eine Identitätskarte, eine Banknote, ein Zertifikat, oder anderes Dokument dieser Kategorie ist. Des Weiteren sind auch Dokumente im weiteren Sinne wie Verpackungen zu verstehen, die schützenswerte Ware wie Ersatzteile oder Luxusmarkenartikel beinhalten.
3. Eine mobile Vorrichtung, die vorzugsweise für jedermann leicht verfügbar quasi ubiquitär ist und mit einer Lichtquelle beispielsweise eine - vorzugsweise integrierte - Blitzlichteinheit, LED- oder Halogenlichtquelle ausgestattet bzw. mit dieser verbunden ist. Des Weiteren ist diese Vorrichtung mit einem Scanner oder eine Kamera versehen, um die optische Funktion des fotochromen ersten Merkmals zu erkennen. Des Weiteren ist die mobile Vorrichtung mit einem Bildschirm bzw. einem Display ausgestattet, um die Vorrichtung auf das Sicherheitselement ausrichten und das Verifikationsergebnis darstellen zu können. Des Weiteren kann diese mobile Vorrichtung das Verifikationsergebnis zur weiteren Auswertung an eine zentrale Datenbank bzw. einen zentralen Server, der an eine Datenbank angebunden ist, weiterleiten. Die Anbindung führt über das Internet und kann über übliche Übertragungsverfahren wie W-LAN, G3/UMTS oder EDGE aufgebaut werden. Für diese Anforderungen sind insbesondere entsprechend ausgestattete Mobiltelefone (Smartphone) oder ein Handscanner geeignet.
4. Verifikationssoftware, um die Verifikation und Datenübertragung mit der genannten Vorrichtung durchführen zu können. Vorzugsweise kann der Verifikationsvorgang bzw. die dazu notwendige Software mit einem Icon (App) auf dem Display der Vorrichtung aktiviert werden.
5. Die Verifikation des mindestens ersten Sicherheitsmerkmals mit Hilfe einer Folge von Aufnahmen über die Kamera oder den Scanner mit und ohne aktivierte Licht- bzw. Blitzlichtquelle sowie eine Auswertung des Verifikationsergebnisses und seine Weiterleitung an die zentrale Datenbank bzw. den Server mit der zentralen Datenbank.
6. Die Auswertung des Ergebnisses der Verifikation (Ja/Nein) erfolgt über einen Server, der in ein gesichertes Netzwerk integriert ist, z. B. einen Webserver mit einem https-Protokoll, und mit der mobilen Vorrichtung zumindest zeitweise eine Verbindung hat. Die Daten können aber natürlich auch in anderen Formaten, z. B. als Feeds via RSS oder Atom-Protokoll übertragen werden. Dabei dient der Server nicht nur der reinen Sammlung der Daten, sondern führt auch deren statistische Auswertung aus, wobei insbesondere die Verrechnung zu erwähnen ist.

Die genannte Vorrichtung mit den Bestandteilen Kamera/Scanner, Licht-/Blitzquelle und Display kann auch als reines Hilfsmittel ohne Serveranbindung zur Verifikation geeignet sein, so dass neben der rein visuellen Beobachtung des Merkmals (Sicherheitsmerkmal der ersten Stufe), die Verifikation mit diesem Hilfsgerät möglich ist und damit aus der Bacteriorhodopsin-Markierung ein Sicherheitsmerkmal der zweiten Stufe macht und die Zuverlässigkeit der Verifikation verbessert. Das Datenverarbeitungsprogramm auf dem Mobiltelefon kann übrigens auch für die reine visuelle Verifikation gleich noch entsprechende Hilfedienstleistungen zur Verfügung stellen, beispielsweise Hinweise, worauf bei welchem Sicherheitsmerkmal bei der optischen Verifikation besonders zu achten ist et cetera.

Es besteht ausserdem die zusätzliche, aber nicht zwangsläufig notwendige, Option ein zweites Sicherheitsmerkmal, das einer optischen Auswertung zugänglich ist, während des gleichen Authentisierungsvorgangs zu registrieren. Ein solches Merkmal kann ein Farb-oder Zahlencode, ein Muster wie zum Bespiel wie in EP-A-1690697 beschrieben oder eine Mikrostruktur sein (WO2009/115611). Kombinationen eines ersten Merkmals mit einem zweiten Merkmal, das eine zufallsbedingte Mikrostruktur ist, als Sicherheitsmerkmal zur Verifikation mit einer Kamera- oder Scanner-bestückten Vorrichtung wurden beschrieben (WO2010/023243) und können idealerweise mit einer Vorrichtung entsprechend dieser Erfindung authentisiert werden, und insbesondere bevorzugt kann dazu das gleiche Datenverarbeitungsprogramm ausgelegt sein. So kann beispielsweise das Datenverarbeitungsprogramm interaktiv dem Benutzer dazu instruieren, die verschiedenen Sicherheitsmerkmale sequenziell auszulesen respektive zu verifizieren.

Entsprechend betrifft zusammenfassend die vorliegende Erfindung eine Vorrichtung und ein Verfahren, um den sichtbaren Farbwechsel beispielsweise eines BR-PM-Komplexes beim Übergang vom dunkel- zum helladaptierten Zustand zu induzieren und zu verfolgen, wobei das Verfahren der Authentifizierung eines Sicherheitsdokumentes dient und die Ergebnisse der Authentifizierung optional an einen zentralen Server bzw. eine zentrale Datenbank übermittelt werden können und die dort gesammelten Daten zum Beispiel einer statistischen Auswertung zugänglich sind und optional als Basis für ein Bezahlsystem dienen können. Die Vorrichtung und das Verfahren erlauben es dem Prüfer des Sicherheitsdokumentes, die Authentifizierung daneben auch visuell zu verfolgen, so dass durch visuelle und gleichzeitig mit der Vorrichtung durchgeführte Authentifizierung desselben Dokumentes eine Redundanz und damit ein hochwertiges Ergebnis der Authentifizierung ermöglich wird.

Sicherheitsdokumente zur Verwendung in einem derartigen Verfahren, insbesondere beispielsweise dadurch gekennzeichnet, dass es Bacteriorhodopsin als Sicherheitsmerkmal enthält, werden offenbart. Das Sicherheitsdokument kann dabei zum Beispiel aus Papier sein und/oder aus einem Polymer bestehen, und/oder ein Laminat sein. Das Substrat des Dokumentes kann auch eine Karte sein. Ein solches Dokument kann zudem bevorzugtermassen zweites optisch erkennbares Sicherheitsmerkmal aufweisen, das sich in den Erfassungsbereich der Kamera gebracht werden kann, beispielsweise, wenn diese das erste Sicherheitsmerkmal aufnimmt
Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Sicherheitsdokument mit Bildelement enthaltend ein mindestens erstes Sicherheitsmerkmal bestehend aus einer durch Druck applizierten BR-PM-Formulierung;

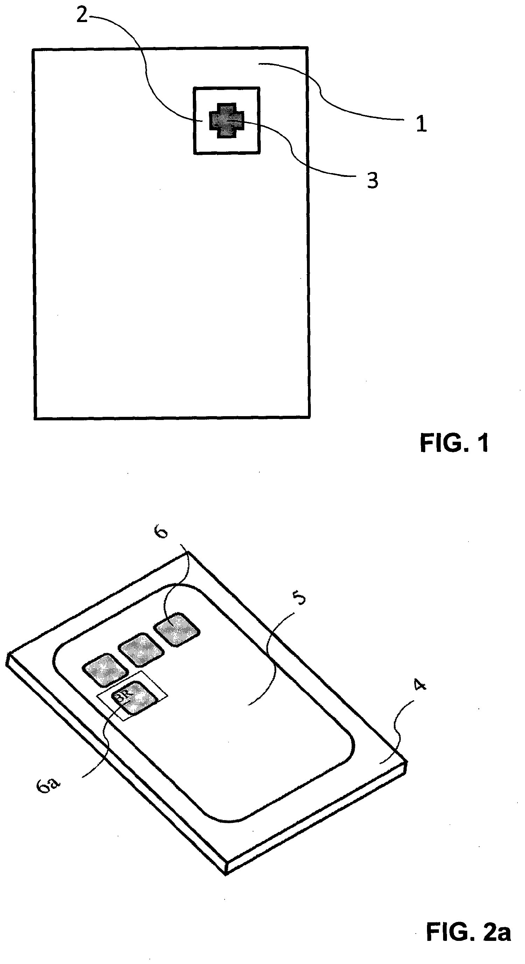

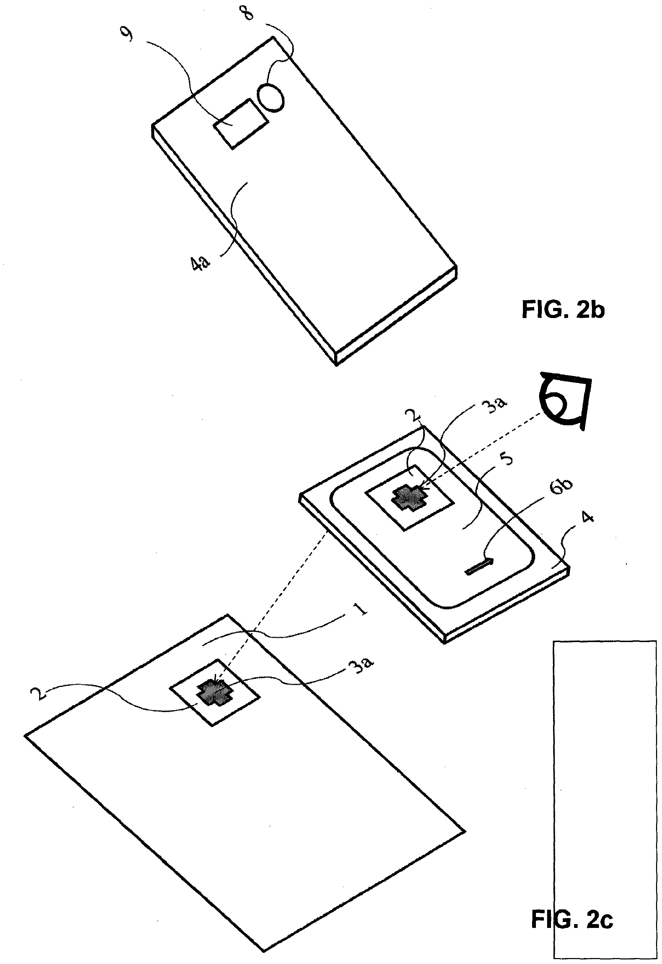

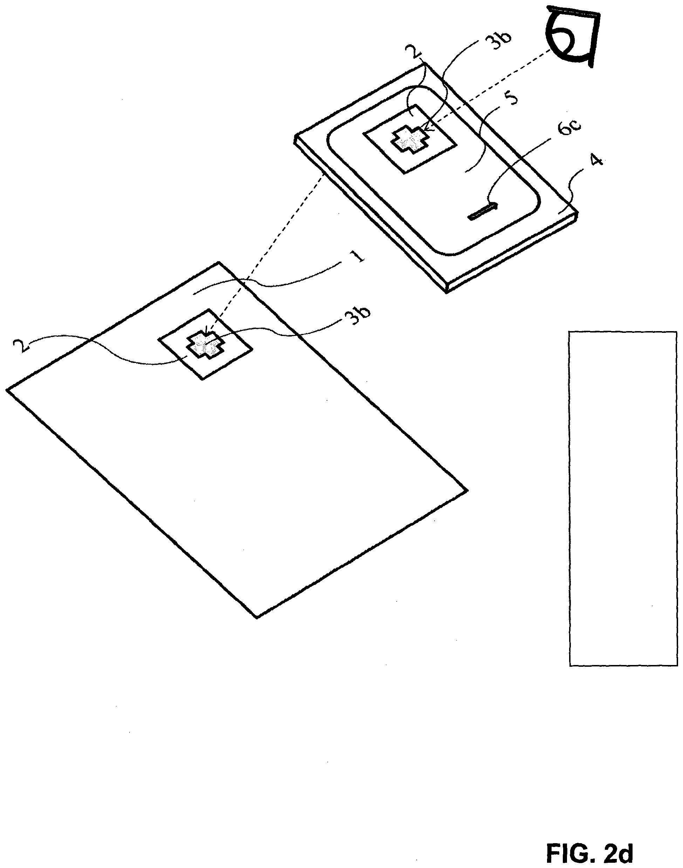

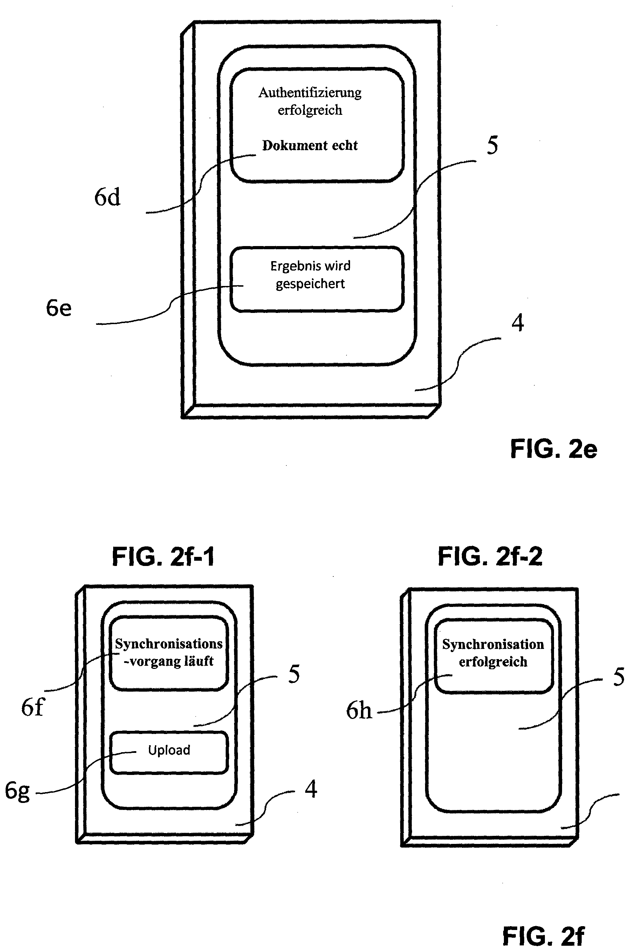

- Fig. 2: in a) ein Mobiltelefon mit berührungsgesteuertem Display enthaltend Piktogramme (App) zum Starten von Anwendungsprogrammen, die im Telefon installiert sind, wobei mindestens ein Piktogramm die Anwendung für die Authentifizierung gemäss Erfindung startet; in b) die Rückseite des Mobiltelefons, d.h. die beim Verifikationsprozess dem Sicherheitsdokument zugewandte Seite, mit Kamera und integriertem Blitzgerät; in c) die Authentifizierung des Sicherheitsdokumentes mit Hilfe des Mobiltelefons nach Start des Authentifizierungsprogramms, wobei der dunkeladaptierte Zustand des Sicherheitsmerkmals vom Prüfer visuell auf dem Display erkannt wird und als Bild im Speicher des Telefons abgelegt wird, wobei der im Telefon integrierte Blitz nicht eingesetzt wird, wobei der dunkeladaptierte Zustand durch eine kurzzeitige vorherige Abdunkelung des Sicherheitsmerkmals, zum Beispiel mit einem lichtundurchlässigen Karton, sichergestellt werden kann, und wobei eine weitere Eingabeaufforderung zur Erzeugung der helladaptierten Form und zu dessen Bild als Datei im Telefonspeicher führt; in d) den zweiten Schritt der Authentifizierung des Sicherheitsdokumentes mit Hilfe des Mobiltelefons, wobei der helladaptierte Zustand des Sicherheitsmerkmals 3b vom Prüfer visuell auf dem Display erkannt wird und als Bild im Speicher des Telefons abgelegt wird, wobei der im Telefon integrierte Blitz eingesetzt wird, um den helladaptierten Zustand des Merkmals herbeizuführen, und wobei eine weitere Eingabeaufforderung zur Berechnung des Ergebnisses der Authentifizierung führt; in e) eine Anzeige des Authentifizierungsergebnisses ermittelt anhand der Messung der Differenz der Luminanz des Bildes des Merkmals zwischen erster und zweiter Messung und der Vergleich dieses Wertes mit einem Referenzwert, der als Schwellwert für die Differenz der Luminanz gesetzt wurde, wobei die Speicherung des Ergebnisses, das bei der nächsten Synchronisation des Mobiltelefons mit dem zentralen Server zusammen mit allen vorherigen Ergebnissen der Authentifizierungsvorgänge seit der letzten Synchronisation an diesen Server übermittelt werden wird, möglich ist, in f), spezifisch in Fig. 2f-1 ein Telefondisplay während der Synchronisation mit dem zentralen Server, wobei der Hinweis auf den laufenden Vorgang hinweist, wobei der weitere Hinweis daraufhin weist, dass zu diesem Zeitpunkt die Daten der Authentifizierung aus dem Telefonspeicher zum Server hochgeladen werden; und in Fig. 2f-2 ein Telefondisplay mit der Meldung das Ende der Synchronisation anzeigt, wobei alle von jetzt an durchgeführten Authentizifierungsvorgänge Ergebnisse erzeugen, die im Speicher des Telefons gesammelt und bei den nächsten Synchronisation an den Server übermittelt werden;
- Fig. 3: den Zeitablauf der des Authentifizierungsvorgangs, wobei t₀: Start der Authentifizierung; t₁: Messung der reflektierten Luminanz des dunkeladaptierten Sicherheitsmerkmals; t₂: Messung der reflektierten Luminanz des helladaptierten Sicherheitsmerkmals; t₃: Errechnung der Luminanzdifferenz und Vergleich mit hinterlegtem Referenzwert; t₄: Ausgabe des Ergebnisses in Form von echt/unecht-Aussagen;
- Fig. 4: ein Flussdiagramm des Ablaufs des Authentifizierungsprogramms innerhalb des Mobiltelefons; und
- Fig. 5: die Synchronisation zwischen Mobiltelefon und Server und Datenbank sowie Berechnung der Authentifizierungsleistung über ein automatisches Bezahlsystem (pay-per authentification) und Versand der Authentifizierungsberichte mit den zugehörigen Rechnungen.

### BESCHREIBUNG BEVORZUGTER AUSFÜHRUNGSFORMEN

Die mobile Vorrichtung ist, wie insbesondere aus Figur 2 erkannt werden kann, ein Smartphone 4 mit einem grossen Display 5, das via Berührung eines grafischen Symbols 6 (Icon bzw. App) eine Software starten kann und ein gut erkennbares Live-Bild des Dokumentes, das auf der anderen Seite des Telefons angebracht ist, darstellen kann. Dieses Mobiltelefon 4 verfügt ausserdem über integriertes Blitzgerät 9, das den Farbwechsel eines Bacteriorhodopsin-Purpurmembran-Komplexes einem helleren Farbton auslösen kann. Im vorliegenden Fall ist der Bacteriorhodopsin-Purpurmembran-Komplex in einer Formulierung enthalten, die auf dem Dokument 1 (vergleiche beispielsweise Figur 1) über ein Druckverfahren aufgetragen ist. In diesem Komplex ist die Bacteriorhodopsin-Variante an der Position 96 des Opsins gegenüber dem Wildtyp mutiert und verfügt damit über eine für den Farbwechsel komfortable Schaltzeit, die mit dem blossen Auge und/oder diesem Instrument im Bereich 0.5 bis 30 Sekunden, bevorzugt 2 bis 20 Sekunden gut verfolgbar ist. Das zu authentisierende Dokument (vergleiche Figur 1) enthält ein zum Beispiel mit Siebdruck appliziertes Logo als Bildelement 2, das den beschriebenen Opsin-Komplex als farbgebenden Stoff enthält. Es wird dabei, beispielsweise über ein temporäres Abdecken des Sicherheitsmerkmals 3, sichergestellt, dass dieses Dokument 1 vor der Authentizierung 17 mit dem Mobiltelefon 4 nicht dem Licht ausgesetzt wird, so dass das Logo im lilafarbenen Ton des dunkeladaptierten Opsin erscheint. Das Mobiltelefon 4 nimmt das Bild des Dokumentes 1a (Zeitpunkt T1) auf und stellt dieses auf dem Display 5 dar, damit der Prüfer 15 sich von dieser Farbe überzeugen kann (vergleiche insbesondere Figur 2c). Gleichzeitig wird dieses erste Bild im Gerät 4 gespeichert. Anschliessend wird von diesem Mobiltelefon eine zweite Aufnahme unter Verwendung des Blitzlichtes (Zeitpunkt T2) gemacht (vergleiche insbesondere Figur 2d). Auch diese Aufnahme wird auf dem Display dargestellt, damit sich der Prüfer 15 von dem jetzt helladaptierten, hellen Farbton überzeugen kann. Der Farbton kann sich in diesem zweiten Bild bis zu senfgelb oder hellgelb aufhellen. Es reicht jedoch für eine erste visuelle Verifikation 16, wenn der Prüfer nur ein Aufhellen des vorher lilafarbenen Tons erkennt. Auch dieses Bild wird im Telefon 4 gespeichert. Vor der ersten Aufnahme hat der Prüfer mit der Berührung eines Icons 6 auf dem Display 5 eine Software-Anwendung gestartet, die den weiteren Ablauf des Vorgangs steuert. Nach dem zweiten Bild vergleicht, gegebenenfalls nach einer entsprechenden Anpassung der relativen Orientierung et cetera, die Software die Helligkeit der zwei unterschiedlich belichteten Bilder aneinander an und erkennt den Farbwechsel des Opsin-Komplexes im Logo des Dokumentes. Sofern der Farbwechsel signifikant ist, zeigt das Telefon im Display an, dass die Authentizierung erfolgreich war und ermittelt das Ergebnis. Die Authentizierung ist dann erfolgreich, wenn die Differenz der Farborte der beiden Opsinzustände, im einfachsten Fall die Differenz der Helligkeit des Opsins einen bestimmten Schwellwert 10 überschreitet. Das Ergebnis dieser Auswertung wird dem Prüfer am Bild als klare Aussage dargestellt, z. B. als "echt" oder "unecht".

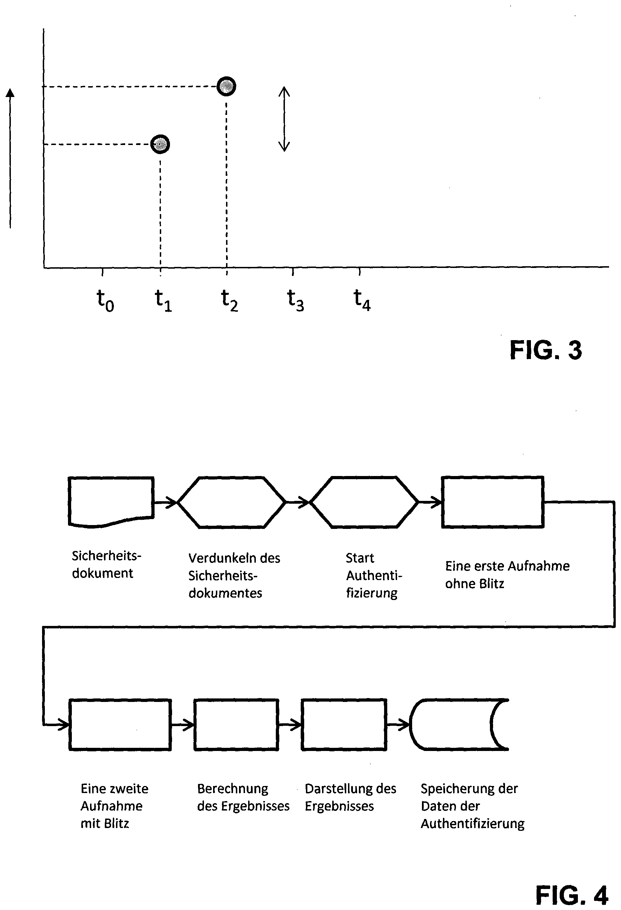

Die einzelnen Schritte, wie sie auf dem Display dargestellt werden, sind in den Figuren 2e-2f dargestellt. Die Veränderung der beiden Zustände als Funktion der Zeit, wobei entlang der vertikalen Achse die Helligkeit angegeben ist, sind in Figur 3 dargestellt. Die einzelnen Schritte sind im Rahmen eines Fluss der ganz in Figur 4 zusammengefasst.

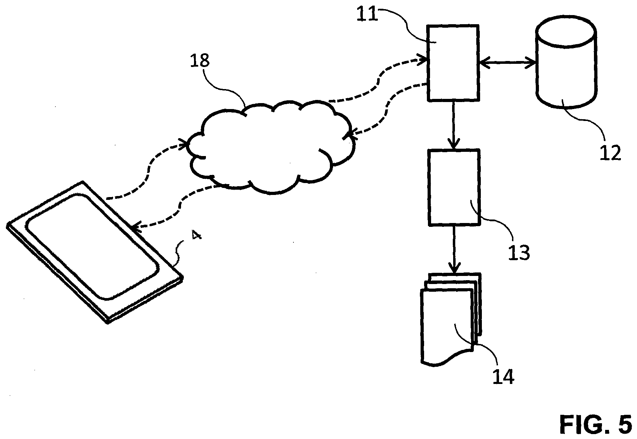

Gleichzeitig wird das Ergebnis via E-Mail 18, eine Mobiltelefonverbindung oder über eine andere Übertragungsmöglichkeit über das Internet (vergleiche Figur 5) an einen Server 11 übermittelt, der das Ergebnis einem via einer Datenbank 12 einem weiteren Programm 13 zur Berechnung der Verifikationsleistung (Rechnungen 14) zur Verfügung stellt.

**BEZUGSZEICHENLISTE**

| | | | |
|---|---|---|---|
| 1 | Sicherheitsdokument | 6g | Authentizierungshinweis |
| 2 | Bildelement | 6h | Meldung Ende der Synchronisation |
| 3 | Sicherheitsmerkmal, fotosensitives Opsin | 8 | Kamera |
| 3a | dunkeladaptierter Zustand des Sicherheitsmerkmals | 9 | integriertes Blitzgerät |
| 3b | helladaptierter Zustand des Sicherheitsmerkmals | 11 | Server |
| 4 | Mobiltelefon | 12 | Datenbank |
| 4a | dem Sicherheitsdokument zugewandte Seite von 4 | 13 | Berechnung der Authentifizierungsleistung , Inkasso Software |
| 5 | Display | 14 | Authentifizierungsberichte mit den zugehörigen Rechnungen |
| 6 | Piktogramm, Icon des Datenverarbeitungsprogramms | 16 | Beginn Authentifizierungsvorgang und visuelle Prüfung |
| 6a | Piktogramm | 17 | Authentifizierung |
| 6b | weitere Eingabeaufforderung | 18 | Synchronisation, Übersendung Ergebnis via Mobilfunkverbindung/ Internet, z.B. E-Mail |
| 6c | weitere Eingabeaufforderung | | |
| 6d | Anzeige des Authentifizierungsergebnisses | | |
| 6e | Ergebnisanzeige | | |
| 6f | Hinweis auf den laufenden Vorgang | | |

## Patentansprüche

1. Verfahren zur Überprüfung der Echtheit eines Sicherheitsmerkmals (3), insbesondere auf einem Sicherheitsdokument (1), wobei es sich beim Sicherheitsmerkmal um ein Sicherheitsmerkmal handelt, dessen Erscheinung im sichtbaren Bereich unter der Anregung eines Lichtblitzes eine Veränderung zeigt, **dadurch gekennzeichnet, dass** das Verfahren die folgenden Schritte aufweist:
I. Aufnehmen wenigstens eines ersten Bildes des nicht angeregten Sicherheitsmerkmals (3a) mit einem Mobiltelefon (4), welches gleichzeitig eine Kamera (8) mit integrierter Blitzfunktion (9) aufweist;
II. Aufnehmen wenigstens eines zweiten Bildes des mit dem unter Verwendung der Blitzfunktion (9) angeregten Sicherheitsmerkmals (3b) mit dem gleichen Mobiltelefon;
mit der Maßgabe, dass die Reihenfolge der Schritte I. & II. auch umgekehrt sein kann, und dass nach Schritt II. im Mobiltelefon (4) aus den wenigstens zwei Bildern unter Zuhilfenahme eines geeigneten Datenverarbeitungsprogramms auf dem Mobiltelefon (4) eine Authentifikationsprüfung durchgeführt wird und das Resultat dieser Prüfung über ein Display oder eine akustische Schnittstelle auf dem Mobiltelefon (4) ausgegeben wird.

2. Verfahren nach Anspruch 1, **dadurch gekennzeichnet, dass** das Verfahren ausserdem durch folgenden Schritt ausgezeichnet ist:
III. Aufbau einer kabellosen Verbindung über die Telefonfunktion oder eine Internetfunktion des Mobiltelefons (4) und Übermittlung wenigstens eines oder beider der Bilder oder einer aus der Differenz der beiden Bilder abgeleiteten Authentifikationsfunktion an einen Empfänger mit einer Datenbank (12), Auswertung der Authentifikation und/oder Buchung der Authentifikation beim Empfänger.

3. Verfahren nach Anspruch 2, **dadurch gekennzeichnet, dass** nach Schritt III. im Mobiltelefon (4) aus den wenigstens zwei Bildern unter Zuhilfenahme eines geeigneten Datenverarbeitungsprogramms auf dem Mobiltelefon (4) eine Authentifikationsprüfung durchgeführt wird und das Resultat dieser Prüfung über ein Display oder eine akustische Schnittstelle auf dem Mobiltelefon (4) ausgegeben wird.

4. Verfahren nach Anspruch 2 oder 3, **dadurch gekennzeichnet, dass** nach Schritt III., gegebenenfalls nach Akkumulation von genügenden Authentifikationvorgängen, vom Empfänger direkt oder indirekt ein Bericht an das Mobiltelefon (4) und/oder über einen anderen Kommunikationsweg mit einer statistischen Auswertung und/oder Fakturierung ausgegeben wird.

5. Verfahren nach einem der Ansprüche 2-4, **dadurch gekennzeichnet, dass** nach Schritt III. der Empfänger das Resultat der Authentifikation an das Mobiltelefon (4) übermittelt und dieses Resultat auf dem Mobiltelefon (4) auf einem Display oder über eine akustische Schnittstelle ausgegeben wird.

6. Verfahren nach einem der Ansprüche 2-5, **dadurch gekennzeichnet, dass** die kabellose Verbindung im Rahmen des Schrittes III. eine gesicherte Internetverbindung ist.

7. Verfahren nach einem der vorhergehenden Ansprüche, **dadurch gekennzeichnet, dass** es sich beim Sicherheitsmerkmal um ein fotochromes Sicherheitsmerkmal handelt, welches unter Einwirkung des Blitzes (9) eine Farbänderung und/oder Formänderung zeigt.

8. Verfahren nach Anspruch 7, **dadurch gekennzeichnet, dass** es sich beim Sicherheitsmerkmal um ein Sicherheitsmerkmal auf Basis eines Retinalproteins, insbesondere auf Basis von Bacteriorhodopsin, bevorzugtermassen in seiner in der Purpurmembran eingebauten Form, handelt, wobei das Bacteriorhodopsin bevorzugt aus dem Wildtyp des Halobakteriums stammt und insbesondere bevorzugt ein Mutant des Typs D96N ist.

9. Verfahren nach Anspruch 8, **dadurch gekennzeichnet, dass** im Schritt I. der dunkeladaptierte Zustand (3a) des Bacteriorhodopsins über das erste Bild ausgemessen wird und im Schritt II. der helladaptierte Zustand (3b) des Bacteriorhodopsins ausgemessen wird, wobei bevorzugtermassen der helladaptierte Zustand (3b) bei mehr als einem Zeitpunkt nach der Anregung ausgemessen wird.

10. Verfahren nach einem der vorhergehenden Ansprüche, **dadurch gekennzeichnet, dass** die Bilder in Form eines Filmes aufgenommen und ausgewertet werden oder in Form von wenigstens einem Bild im Rahmen des Schrittes I., und wenigstens zwei, bevorzugt wenigstens drei, zeitlich verzögert aufgenommenen Bildern im Rahmen des Schrittes II.

11. Verfahren nach einem der vorhergehenden Ansprüche, **dadurch gekennzeichnet, dass** vorgängig zum Schritt I. das Sicherheitsmerkmal (3) vor der Einwirkung von Licht geschützt wird, und im wesentlichen unmittelbar anschließend der Schritt I. durchgeführt wird.

12. Verfahren nach einem der vorhergehenden Ansprüche, **dadurch gekennzeichnet, dass** das Verfahren steuernde und auf dem Mobiltelefon (4) laufende Datenverarbeitungsprogramm aus den wenigstens zwei Bildern eine Authentifikationsfunktion berechnet.

13. Auf einem Mobiltelefon (4) lauffähiges Datenverarbeitungsprogramm zur Durchführung eines Verfahrens nach einem der Ansprüche 1-12.

14. Mobiltelefon, welches eine Kamera (8) mit integrierter Blitzfunktion (9) aufweist, auf welchem ein Datenverarbeitungsprogramm nach Anspruch 13 gespeichert und ausführbar ist.

## Claims

1. A method for checking the genuineness of a security feature (3), particularly on a security document (1), wherein the security feature is a security feature whose appearance in the visible range when excited by a flash of light exhibits an alteration, **characterized in that** the method comprises the following steps:
I. taking at least one first image of the unexcited security feature (3a) using a mobile telephone (4) which simultaneously has a camera (8) with an integrated flash function (9);
II. taking at least one second image of the security feature (3b) excited using the flash function (9), using the same mobile telephone;
with the proviso that the order of steps I. & II. may also be converse, and **in that** after step II. the mobile telephone (4) performs an authentication check from the at least two images using a suitable data processing program on the mobile telephone (4), and the result of this check is output by means of a display or an audio interface on the mobile telephone (4).

2. The method according to Claim 1, **characterized in that** the method is further distinguished by the following step:
III. setting up a wireless link using the telephone function or an Internet function on the mobile telephone (4), and transmitting at least one or both of the images or an authentication function derived from the difference between the two images to a receiver having a database (12), evaluating the authentication at the receiver and/or logging the authentication with the receiver.

3. The method according to Claim 2, **characterized in that** after step III. the mobile telephone (4) performs an authentication check from the at least two images using a suitable data processing program on the mobile telephone (4), and the result of this check is output by means of a display or an audio interface on the mobile telephone (4).

4. The method according to Claim 2 or 3, **characterized in that** after step III., if appropriate after the accumulation of enough authentication processes, the receiver directly or indirectly outputs a report to the mobile telephone (4) and/or via a different communication path with a statistical evaluation and/or invoicing.

5. The method according to any one of Claims 2-4, **characterized in that** after step III. the receiver transmits the result of the authentication to the mobile telephone (4) and **in that** this result is output on the mobile telephone (4) on a display or by means of an audio interface.

6. The method according to any one of Claims 2-5, **characterized in that** the wireless link within the context of step III. is a protected Internet connection.

7. The method according to any one of the preceding claims, **characterized in that** the security feature is a photochromic security feature which exhibits a change of colour and/or change of shape under the action of the flash (9).

8. The method according to Claim 7, **characterized in that** the security feature is a security feature based on a retinal protein, particularly based on bacteriorhodopsin, preferably in its form incorporated in the purple membrane, wherein the bacteriorhodopsin preferably stems from the wild type of the halobacterium and is particularly preferably a mutant of type D96N.

9. The method according to Claim 8, **characterized in that** in step I. the dark-adapted state (3a) of the bacteriorhodopsin is measured using the first image and in step II. the light-adapted state (3b) of the bacteriorhodopsin is measured, wherein preferably the light-adapted state (3b) is measured for more than one instant after the excitation.

10. The method according to any one of the preceding claims, **characterized in that** the images are taken and evaluated in the form of a film or in the form of at least one image within the context of step I., and at least two, preferably at least three, images taken with delayed timing within the context of step II.

11. The method according to any one of the preceding claims, **characterized in that** prior to step I. the security feature (3) is protected against the action of light, and step I. is performed essentially immediately afterwards.

12. The method according to any one of the preceding claims, **characterized in that** the data processing program which controls the method and runs on the mobile telephone (4) calculates an authentication function from the at least two images.

13. A data processing program which is executable on a mobile telephone (4) for carrying out a method according to one of Claims 1-12.

14. A mobile telephone, which has a camera (8) with an integrated flash function (9), on which a data processing program according to Claim 13 is stored and executable.

## Revendications

1. Un procédé de vérification de l'authenticité d'une caractéristique de sécurité (3), en particulier sur un document de sécurité (1), où dans le cas de la caractéristique de sécurité il s'agit d'une caractéristique de sécurité présentant un changement en apparence dans le domaine visible sous excitation par un flash de lumière, **caractérisé en ce que** le procédé présente les étapes suivantes :
I. prendre au moins une première image de la caractéristique de sécurité (3a) non excitée à l'aide d'un téléphone mobile (4), lequel possède également une caméra (8) à fonction de flash intégré (9);
II. prendre au moins une deuxième image de la caractéristique de sécurité (3b) excitée à l'aide de la fonction de flash intégré (9), à l'aide du même téléphone mobile;
dans la mesure où l'ordre des étapes I. et II. peut aussi être inversé, et que dans le téléphone mobile (4), après l'étape II. une vérification de l'authenticité à base des au moins deux images est effectuée sur le téléphone mobile (4) à l'aide d'un logiciel de traitement de données approprié et le résultat de cette vérification est affiché à travers un écran ou un interface acoustique sur le téléphone mobile (4).

2. Un procédé selon la revendication 1, **caractérisé en ce que** le procédé est en outre distingué par l'étape suivante :
III. établir une liaison sans fil à travers la fonction de téléphonie ou une fonction internet du téléphone mobile (4) et transmettre au moins une image, ou des deux, ou d'une fonction d'authentification dérivée à partir de la différence entre les deux images, vers un destinataire disposant d'une base de données (12), analyser l'authentification et/ou enregistrer l'authentification au niveau du destinataire.

3. Un procédé selon la revendication 2, **caractérisé en ce que** dans le téléphone mobile (4), après l'étape III, une vérification de l'authenticité à base des au moins deux images est effectuée sur le téléphone mobile (4) à l'aide d'un logiciel de traitement de données approprié et le résultat de cette vérification est affiché à travers un écran ou un interface acoustique sur le téléphone mobile (4).

4. Un procédé selon une des revendications 2 ou 3, **caractérisé en ce qu'**après l'étape III., éventuellement après l'accumulation d'un nombre suffisant de processus d'authentification, un rapport est issue de manière directe ou indirecte au téléphone mobile (4) par le destinataire et/ou à travers une autre voie de communication avec une évaluation statistique et/ou facturation.

5. Un procédé selon une des revendications 2 à 4, **caractérisé en ce qu'**après l'étape III., le destinataire transmet le résultat de l'authentification au téléphone mobile (4) et ce résultat est affiché sur le téléphone mobile (4) sur un écran ou à travers une interface acoustique.

6. Un procédé selon une des revendications 2 à 5, **caractérisé en ce que** dans le cadre de l'étape III, la liaison sans fil est une liaison internet sécurisée.

7. Un procédé selon une des revendications précédentes, **caractérisé en ce que** dans le cas de la caractéristique de sécurité il s'agit d'une caractéristique de sécurité photochrome, laquelle présente un changement de couleur et/ou de forme sous l'action du flash (9).

8. Un procédé selon la revendication 7, **caractérisé en ce que** dans le cas de la caractéristique de sécurité il s'agit d'une caractéristique de sécurité à basé d'une protéine de rétinal, en particulier à base de bactériorhodopsine, préférablement dans sa forme incorporée dans la membrane pourpre, où la bactériorhodopsine provient préférablement du type naturel d'un l'halobacterium, et en particulier préférablement est une mutante de type D96N.

9. Un procédé selon la revendication 8, **caractérisé en ce que** dans l'étape I., l'état adapté sombre (3a) de la bactériorhodopsine est mesuré à travers la première image et dans l'étape II. l'état adapté éclairé (3b) de la bactériorhodopsine est mesuré, où préférablement l'état adapté éclairé (3b) est mesuré après l'excitation à plus d'un point temporel.

10. Un procédé selon une des revendications précédentes, **caractérisé en ce que** les images sont enregistrées en forme d'un film et sont évaluées, ou sont en forme d'au moins une image dans le cadre de l'étape I. et au moins deux, préférablement au moins trois, images décalées temporellement dans le cadre de l'étape II.

11. Un procédé selon une des revendications précédentes, **caractérisé en ce que** préalablement à l'étape I., la caractéristique de sécurité (3) est protégée de l'action de la lumière, et que sensiblement l'étape I. est immédiatement et subséquemment effectuée.

12. Un procédé selon une des revendications précédentes, **caractérisé en ce que** le logiciel de traitement de données étant effectué sur le téléphone mobile (4) et commandant le procédé, calcule une fonction d'authentification à base des au moins deux images.

13. Un logiciel de traitement de données pouvant être effectué sur un téléphone mobile (4) pour la réalisation d'un procédé selon une des revendications 1 à 12.

14. Un téléphone mobile, comprenant une caméra (8) à fonction de flash intégrée (9), sur lequel un logiciel de traitement de données selon la revendication 13 est enregistré et peut être effectué.
